# EUROPEAN PATENT APPLICATION

(11) **EP 4 685 757 A1**
(43) Date of publication of application: **28.01.2026**
(21) Application number: 25174966.9
(22) Date of filing: 08.05.2025
(51) Int. Cl.: G06V 10/82, G06V 20/13, G06V 20/17, G06V 20/10

(54) **ACCESS POINT DETECTION**

(30) Priority: 26.07.2024 GB 202411008
(71) Applicant: AGCO International GmbH, 8212 Neuhausen am Rheinfall (CH)
(72) Inventor: Lyng, Ran Sun, DK8900 Randers (DK); BECH, Søren, DK8900 Randers (DK); LUND, Jens, DK8900 Randers (DK); LAUSDAHL, Kenneth, DK8900 Randers (DK)
(74) Representative: AGCO Intellectual Property Department

(57) **Abstract**

A mechanism for identifying access points on a boundary of an agricultural region. An image of the agricultural region is processed to identify candidate or potential access points. A location of each candidate point is identified from image location information. The candidate points are then processed to identify any access points and the location of said access points.

## Description

### FIELD

Embodiments of the present disclosure relate to the field of agriculture, and in particular to the detection of access points to an agricultural region.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account.

There is an ongoing demand to improve the planning and tracking of recommended routes for agricultural vehicles.

### BRIEF SUMMARY

According to examples in accordance with this disclosure, there is provided a computer-implemented method for determining the geographic location of one or more access points to an agricultural region.

The computer-implemented method comprising: obtaining, at a processing system, an image of the agricultural region; obtaining, at the processing system, image location information that defines the geographic location of one or more elements represented in the image of the agricultural region; processing, using the processing system, the image of the agricultural region to identify the representation of one or more first candidate points in the image of the agricultural region; processing, using the processing system, the image location information to identify the geographic location of the one or more first candidate points having an identified representation in the agricultural region; deriving, using the processing system, the one or more access points using the one or more first candidate points; and outputting, from the processing system, the identified geographic location of each of the one or more access points.

The present disclosure recognizes that it is possible to process an image of an agricultural region to identify or detect one or more access points to the agricultural region. In particular, it has been recognized that an image of an agricultural region is likely to contain sufficient features and/or data (e.g., representations of tracks, gate, worn earth, posts, markers and so on) that facilitate the automated identification of one or more access points.

The accurate identification of the location(s) of the access point(s) to an agricultural region is an important task for performing accurate and appropriate route planning for an agricultural vehicle, e.g., to improve fuel efficiency and/or for planning turning procedures (which may not be possible for certain size vehicles). The present disclosure provides a mechanism for automated and accurate identification of the access point(s) to an agricultural region.

In some examples, the act of processing, using the processing system, the image of the agricultural region comprises processing, using the processing system, the image of the agricultural region using one or more machine-learning methods to identify the representation of the one or more candidate points. The present disclosure recognizes that images of an agricultural region contain sufficient information/features to facilitate the processing thereof by a machine-learning method to identify the one or more access points to the agricultural region. More particularly, it has been identified that machine-learning methods are suited to an access point detection task within an image of an agricultural region.

The one or more machine-learning methods may comprise at least one convolutional neural network. This approach recognizes that convolution neural networks (CNNs) are particularly effective for performing the detection of access points (i.e., performing an object detection) within an image.

The image of the agricultural region may be captured using a satellite imaging technique or an aerial photography technique. This recognizes that such images are commonly associated with highly accurate location information for improved identification of the location of the access point. This embodiment also recognizes that such images are well suited for automated analysis to facilitate the identification of access points (i.e., access points and/or features indicative of access points are readily identifiable within such images using automated means)

In some examples, location information identifies the geographic location of all elements represented in the image of the agricultural region. This increases an ease and reliability for correctly identifying the geographic location of an identified access point, as the geographic location of the representation of the access point in the image can be immediately and directed derived.

The computer-implemented method may further comprise obtaining, at the processing system, region location information identifying the location of bounds of the agricultural region; obtaining, at the processing system, vehicular location information identifying geographic locations of one or more agricultural vehicles; and processing, using the processing system, the region location information and the vehicular location information to identify the geographic location of one or more second candidate points.

In such examples, deriving, using the processing system, the one or more access points comprises deriving, using the processing system, the one or more access points from the one or more first candidate points and the one or more second candidate points.

In this approach, the access points are derived from image-derived candidate points and vehicle location derived access points. By combining these two sources of information, it is possible to achieve greater accuracy and reliability in identifying access points. Visual evidence from imagery can be corroborated by vehicle movement data, and vice versa. This dual approach may help to reduce a risk of false positives that might arise from visual misinterpretations in the image analysis; identify access points that may be temporarily obscured or not visually apparent in the imagery; and/or discover new or informal access points that have emerged through vehicle usage patterns but may not yet be visually distinct in imagery.

The computer-implemented may be adapted, wherein deriving, using the processing system, the one or more access points comprises: identifying any first candidate point that is within a first predetermined distance of any second candidate point; and/or identifying any second candidate point that is within a second predetermined distance of any first candidate point; and deriving, using the processing system, the one or more access points from any identified first candidate point and/or any identified second candidate point.

This provides a technique in which a candidate point is only identified as an access point if the candidate point is validated or corroborated with a candidate point derived using a different technique. This reduces a risk of error, particularly a false positive error. In this way, by combining these different data sources and applying proximity-based validation, the system can provide a more comprehensive and accurate identification of access points,

In some examples, the vehicular location information comprises one or more time series, each time series comprising a sequence of locations of a respective agricultural vehicle at respective points in time. This approach recognizes that agricultural vehicles may have a particular pattern of movement over time, which can be processed or exploited to identify potential access points. By analyzing sequences of locations for each vehicle, the system can detect patterns indicative of entering or exiting the agricultural region.

The act of processing, using the processing system, the region location information and the vehicular information may comprise: identifying, in each time series of the vehicular information, one or more sets of locations that meet one or more predetermined criteria; processing each set of locations and the region location information to identify the location of one or more initial candidate points on the bounds of the agricultural region; and determining the geographic location of the one or more second candidate points from the identified location of the one or more initial candidate points on the bounds of the agricultural region.

In particular examples, the act of identifying, in each time series of the vehicular information, one or more sets of locations comprises identifying, in each time series of the vehicular information, one or more first sets of two temporally consecutive locations that are either side of the bounds of the agricultural region.

By examining pairs of consecutive locations in the time series data, this approach is able to identify instances where a vehicle has crossed from inside to outside the region (or vice versa), which likely indicates the presence of an access point. The use of "temporally consecutive locations" ensures that the analysis considers the sequential nature of the vehicular movement, reducing the chance of false positives that might arise from comparing non-adjacent data points. By identifying locations that are either side of the bounds of the agricultural region, locations at which the vehicle enters or exits the region (i.e., access points) can be accurately identified.

In some examples, processing each set of locations comprises, for each identified first set of locations: identifying the location, of the first set of locations, that is within the agricultural region; identifying, as an initial candidate point, a first point on the bounds of the agricultural region that is most proximate to the identified location. The rationale behind this approach is that the closest point on the boundary to where the vehicle was (first) detected inside the region is likely to be close to where the vehicle crossed the boundary, and thus, a potential access point.

In some examples, processing each set of locations comprises, for each identified first set of locations: identifying a hypothetical line that connects the locations in the first set of locations to one another; and identifying, as an initial candidate point, a point on the bounds of the agricultural region that intersects the identified hypothetical line. This approach effectively performs a linear interpolation between two locations in the first set of locations to identify a candidate point. This approach recognizes that, in practice, a vehicle moving between two locations can be modelled as travelling in a straight line, particularly when crossing into an agricultural region (i.e., passing through an access point) due to the typically narrow nature of the access point restricting at turning of the vehicle.

Put another way, access points to agricultural regions are often designed as narrow openings in fences or hedgerows, or as gates with a specific width. This physical constraint naturally limits the vehicle's ability to make significant turns while passing therethrough. As a result, the vehicle's path when entering or exiting the field closely resembles a straight line. Use of a linear interpretation technique thereby provides a computationally efficient mechanism for determining an initial candidate point, with sufficient levels of accuracy.

In some examples, processing each set of locations comprises: receiving vehicular indication information that indicates, for each first set of locations, whether or not at least one turn indicator of the respective agricultural vehicle was active during a time window during which the respective agricultural vehicle moved between the locations of the first set of locations; and filtering the first sets of locations to only include first sets of locations for which the at least one turn indicator of the respective agricultural vehicle was active during the time window during which the respective agricultural vehicle moved between the locations.

By filtering the sets of locations to only include those where turn indicators were active, the method reduces false positives that might arise from: vehicle location inaccuracies that may cause apparent boundary crossings during normal field operations; and/or temporary excursions outside the field boundary that do not represent true access points. Thus, more accurate and reliable identification of access points can be achieved.

In some examples, processing each set of locations comprises: receiving vehicular speed information that indicates, for each time series, a speed of the respective agricultural vehicle during the time period represented by the time series; and filtering the first sets of locations to only include first sets of locations for which the vehicular speed information indicates a reduction in the speed of the respective agricultural vehicle immediately before and/or during a time period represented by the first set of locations.

This approach relies upon the recognition that agricultural vehicles often slow down when approaching or passing through access points. By filtering the first set(s) of locations based on this criteria, more reliable identification of initial candidate points is achieved.

In some examples, the act of identifying, in each time series of the vehicular information, one or more sets of locations comprises identifying, in each time series of the vehicular information, one or more second sets of two or more temporally consecutive locations that are spatially proximate to one another, and are spatially proximate to the location of the bounds of the agricultural region.

This approach recognizes that clusters of locations within a time series of vehicular information that are near to one another and near to the bounds of the region represents locations where the agricultural vehicle has stopped or is idling. This can, for instance, help detect access points to the field where unloading/loading is possible.

In some examples, the second set comprises two or more temporally consecutive locations that represent a time period of no less than 5 minutes, are spatially proximate to one another, and are spatially proximate to the location of the bounds of the agricultural vehicle. By introducing a minimum time period, it is possible to filter temporary stops of the vehicle(s) to prioritize longer stops that are more likely to represent locations at which an access point is being used.

In some examples, the act of identifying, in each time series of the vehicular information, one or more sets of locations comprises: receiving vehicular action information that indicates, for each time series, any times at which the respective agricultural vehicle performed a loading or unloading procedure during the time period represented by the time series; and identifying, in each time series of the vehicular information, any third set of locations, wherein each third set of locations comprises temporally consecutive locations that are spatially proximate to the location of the bounds of the agricultural vehicle and for which the vehicular action information indicates that the respective agricultural vehicle was performing a loading or unloading procedure during a time period represented by the third set of locations.

This approach helps identify locations near the bounds of the agricultural region that are actively used for loading and/or unloading the agricultural vehicle(s). This provides more accurate identification of potential access points.

In some examples, the outputting, from the processing system, the identified location of the one or more access points comprises passing the identified location of the one or more access points from the processing system to a navigation system; and the computer-implemented method further comprises: receiving, at the navigation system, a current location of a target agricultural vehicle; and generating, using the navigation system, a recommended route for the target agricultural vehicle responsive to a current location of the target agricultural vehicle and the identified location of the one or more access points.

There is therefore provided a mechanism for performing route planning that makes use of the access point(s) identified by the herein proposed method. The proposed approach facilitates real-time navigation of the agricultural vehicle that takes into account the predicted location of the access points. This provides more contextually aware navigation or routing of the target agricultural vehicle. For instance, the navigation system may be configured to generate the recommended route to start and/or end at an access point for improved (fuel/energy) efficiency in performing an agricultural process within the agricultural region.

There is also provided a processing system comprising: at least one processor; and at least one memory carrying instructions that, when executed by the at least one processor, cause the at least one processor to: obtain an image of the agricultural region; obtain image location information that defines the geographic location of one or more elements represented in the image of the agricultural region; process the image of the agricultural region to identify the representation of one or more candidate points in the image of the agricultural region; process the image location information to identify the geographic location of the one or more first candidate points having an identified representation in the agricultural region; derive the one or more access points using the one or more first candidate points; and output the identified geographic location of each of the one or more access points.

The instructions may be configured, when executed by the at least one processor, cause the at least one processor to perform any herein disclosed method, and vice versa.

In some examples, the processing system further comprises a navigation system configured to: receive the identifying location of the one or more access points from the at least one processor; receive a current location of a target agricultural vehicle; and generate, using the navigation system, a recommended route for the target agricultural vehicle responsive to a current location of the target agricultural vehicle and the identified location of the one or more access points.

There is also provided a non-transitory computer program product comprising instructions which, when the instructions are executed by at least one processor, cause the at least one processor to carry out any herein proposed computer-implemented method.

### BRIEF DESCRIPTION OF THE DRAWINGS

One or more embodiments of the disclosure will now be described, by way of example only, with reference to the accompanying drawings, in which:
FIG. 1 illustrates a system in which embodiments may be employed;
FIG. 2 is a flowchart illustrating a proposed method;
FIG. 3 is a flowchart illustrating another proposed method;
FIG. 4 is a flowchart illustrating a proposed act for use in a method; and
FIG. 5 is a flowchart illustrating another proposed method.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for identifying access points on a boundary of an agricultural region. An image of the agricultural region is processed to identify candidate or potential access points. A location of each candidate point is identified from image location information. The candidate points are then processed to identify any access points and the location of said access points.

In the context of the present disclosure, an access point to an agricultural region is a location/position on the bounds of the agricultural region at which an agricultural vehicle is able to enter and/or exit the agricultural region and/or an agricultural vehicle is able to load and/or unload material over the bounds of the agricultural region. In some preferred examples, each access point is defined as only being an access point through which the agricultural vehicle is able to enter and/or exit the agricultural region.

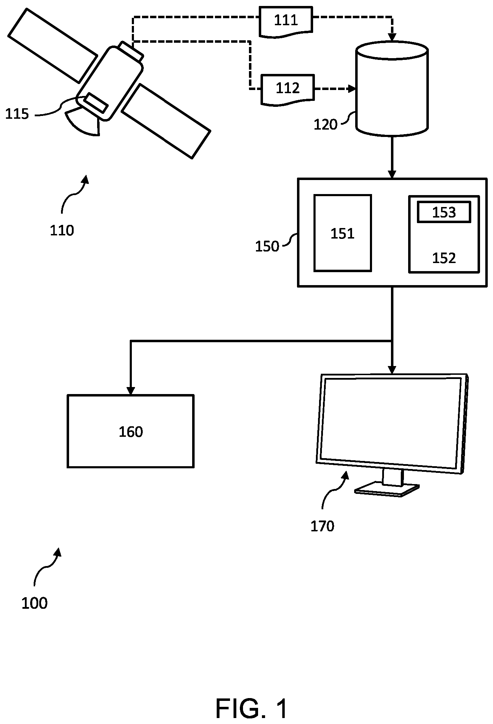

FIG. 1 illustrates a system 100 in which embodiments may be employed, for the sake of improved contextual understanding. The aim of the system 100 is to identify and make use of the geographic location(s) of one or more access points to an agricultural region. The present disclosure provides at least a mechanism for identification of such (a) geographic location(s).

The system 100 comprises an imaging system 110, a (optional) database 120 (i.e., a memory system), a processing system 150, a (optional) navigation system 160 and a (optional) display system 170.

The imaging system 110 is configured to generate an image 111 of the agricultural region, e.g., using a camera 115. As is well known in the art, an image is a data representation of the visual appearance of an imaged region, such that the image 111 is a data representation of the appearance of the agricultural region. Thus, the agricultural region is represented within the image 111. The precise mechanism by which an image is captured by the imaging system is immaterial for the purposes of the present disclosure, as well as being well known in the art.

In some examples, the imaging system 110 may comprise a satellite imaging system (e.g., comprising a satellite) configured to capture an image of the agricultural region. Thus, the image of the agricultural region may be captured using a satellite imaging technique.

As an alternative example, the imaging system may comprise an aerial photographing system (e.g., a manned or unmanned vehicle). In this way, the image of the agricultural region may be captured using an aerial photography technique.

The imaging system 110 is also configured to obtain image location information 112 that defines the geographic location of one or more elements represented in the/each image of the agricultural region.

This can be readily performed alongside the capture of the image of the agricultural region. For instance, it is common for a satellite imaging system to generate an indication of the geographic region represented by a captured image, using known techniques (e.g., by knowledge of the satellite position and direction during capture of the image). A similar approach can be used to define the geographic location of elements represented in an image captured using an aerial photography technique, e.g., based on knowledge of the position and direction of the image sensor that performs aerial photography).

The image(s) 111 and the image location information 112 produced by the imaging system 110 may be stored in the database 120, e.g., a cloud-based storage system. Alternatively, the image(s) and the image location information produced by the imaging system may be directly passed to the processing system 150.

The processing system 150 comprises at least one processor 151; and at least one memory 152 carrying instructions 153 that, when executed by the at least one processor, cause the at least one processor to perform any herein proposed computer-implemented method for determining the geographic location of one or more access points to an agricultural region.

Each at least one processor may be embodied as, for instance, a general-purpose microprocessor (e.g., a CPU), a field-programmable gate array (FPGA), an appropriately configured application-specific integrated circuit (ASIC), and/or a distributed processing arrangement (e.g., comprising multiple interconnected processing units working in parallel). Where relevant, the at least one processor may comprise a neural network accelerator or similar, which may be particularly advantageous when one or more neural networks are employed to perform a function or act of a proposed method.

In this way, the processing system 150 performs the function of identifying the geographic location of the access point(s). The processing system 150 also outputs the identified geographic location(s).

The identified geographic location(s) of the one or more access points may be employed for a variety of purposes.

As an example, the navigation system 160 may be configured to use the geographic location(s) in performing a route planning procedure, e.g., for generating a recommended route for movement of an agricultural vehicle. In particular, where each access point indicates an available entry/exit point to the agricultural region, then the route planning procedure may be configured to plan a route within the agricultural region starting and/or ending at an access point(s).

More particularly, the navigation system 160 may be configured to receive, at the navigation system, a current location of a target agricultural vehicle (TAV); and generate, using the navigation system, a recommended route for the target agricultural vehicle responsive to a current location of the target agricultural vehicle and the identified location of the one or more access points.

As another example, the display system 170 may be configured to provide a visual representation of the geographic location(s) of the access point to help guide an operator of an agricultural vehicle in performing a routing task, e.g., how to enter/exit the agricultural region.

Thus, the geographic location(s) of the access point(s) provide valuable information about the physical location of the access point(s) to aid an operator or further processing system to perform a technical task of routing an agricultural vehicle within and/or to/from the agricultural region.

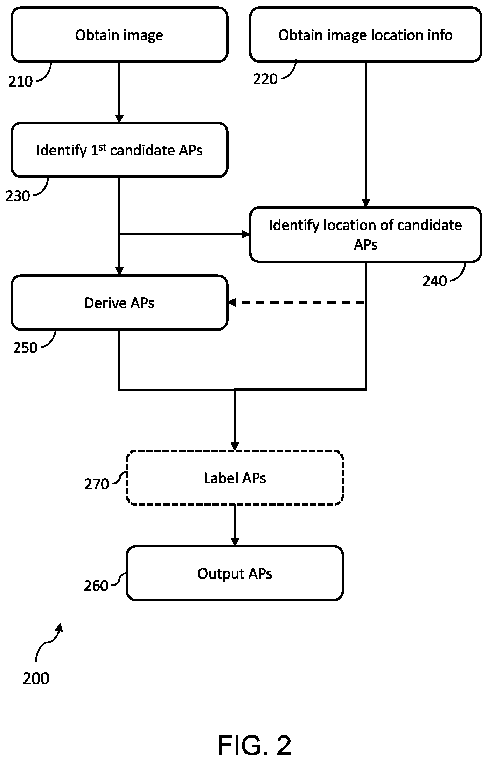

FIG. 2 is a flowchart illustrating a proposed computer-implemented method 200 for determining the geographic location of one or more access points to an agricultural region.

The method 200 is performed by the processing system 150 (FIG. 1). In particular, the method is performed by at least one processor 151 of the processing system 150 when executing instructions carried by one or more non-transitory storage media 152 of the processing system 150.

The method 200 comprises an act 210 of obtaining, at the processing system, an image of the agricultural region. Act 210 may comprise obtaining, receiving or retrieving the image directly from the imaging system that produced the image and/or a database storing images produced by the imaging system.

The method 200 also comprises an act 220 of obtaining, at the processing system, image location information that defines the geographic location of one or more elements represented in the image of the agricultural region. The image location information may have been generated alongside the image, e.g., by a component of the imaging system that generated the image.

In particular, the image location information facilitates the mapping between a location within the image and a geographic location.

By way of example, the image location information may identify the geographic location of all elements represented in the image of the agricultural region. In other words, the image location information may facilitate the direction localization of any element in the geographic location. This can be achieved, for instance, by defining an image co-ordinate system in which the image lies, wherein there is a known mapping between locations in the image co-ordinate system and geographic locations. Other examples will be apparent to the skilled person.

The method 200 also comprises an act 230 of processing, using the processing system, the image of the agricultural region to identify the representation of one or more first candidate points (APs) in the image of the agricultural region. In other words, act 230 comprises processing the image using an object detection algorithm designed to predict the position of any identified access point (AP) in the agricultural region.

Act 230 may, for instance, comprise processing the image of the agricultural region using one or more machine-learning methods to identify the representation of the one or more first candidate points in the image. More particularly, the one or more machine-learning methods may comprise at least one convolutional neural network (CNN). CNNs are particularly suited to a task of analyzing satellite images.

Any suitable object detection algorithm, and specifically a machine-learning method, may be employed to perform act 230.

One example machine-learning algorithm that may be employed is the You Only Look Once algorithm first suggested by Redmon, Joseph, et al. "You only look once: Unified, real-time object detection." Proceedings of the IEEE conference on computer vision and pattern recognition. 2016. Another example is the You Only look Twice algorithm put forward by Van Etten, Adam. "You only look twice: Rapid multi-scale object detection in satellite imagery." arXiv preprint arXiv:1805.09512 (2018), which is specifically designed for use in the processes of images, specifically satellite images. Yet another example, which makes use of one or more convolutional neural networks, is put forward by Ren, Shaoqing, et al. "Faster r-cnn: Towards real-time object detection with region proposal networks." Advances in neural information processing systems 28 (2015). Yet other suitable object detection models that may be employed in performing act 230 are identified by Groener, Austen, Gary Chern, and Mark Pritt. "A comparison of deep learning object detection models for satellite imagery." 2019 IEEE applied imagery pattern recognition workshop (AIPR). IEEE, 2019.

Some embodiments of act 230 therefore make use of one or more machine-learning algorithms for performing object detection (of one or more candidate points) within an image. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm to perform a desired task. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

For use in the above-described approach, the known input data comprises a plurality of images of an agricultural region or agricultural regions. The corresponding known output data comprises, for each image, an identified location of one or more access points represented in the image. The output data may, for instance, be defined by a suitably trained operator or individual manually marking or annotating the location(s) of the access point(s) represented within each image. For improved robustness and reduced risk of overfitting, the input data preferably comprises a plurality of images of a plurality of different agricultural regions.

It is not essential that the machine learning algorithm(s) be trained by the processing system. Rather, the machine-learning algorithm(s) may be trained in advance of its/their usage (i.e., exploitation for performing inference) by the processing system. More specifically, the machine-learning algorithm(s) may be trained by a dedicated training processing system, such as a cloud-based processing system.

The machine-learning algorithm may comprise one or more feature extraction algorithms to extract one or more features from the image of the agricultural region, e.g., objects, edges, shapes and/or texture that may change responsive to whether or not a region of the image represents a candidate point. The one or more features may then be processed by an objection detection algorithm (such as the machine-learning algorithms previously described) to identify the one or more first candidate points. Thus, where relevant, in the preceding description of how to train a machine-learning algorithm, the term "image" may be replaced by the term "one or more features extracted from an/the image" where appropriate.

One example of a feature extraction algorithm that may be employed is a principle component analysis algorithm. Other examples include: wavelet transforms (e.g., to extract multi-scale features from the image), Gabor filtering techniques (e.g., to extract texture-based features), Histogram of Oriented Gradients algorithms and so on. A wide variety of other feature extraction techniques will be readily apparent to the appropriately skilled person.

Another approach to performing act 230 is to make use of one or more other computer vision methods for processing the image of the agricultural region to identify one or more access point(s). Example computer vision methods include a scale-invariant feature transform (SIFT) or speedup up robust features (SURF) algorithm for performing object recognition.

The method 200 also comprises an act 240 of processing, using the processing system, the image location information to identify the geographic location of the one or more first candidate points having an identified representation in the agricultural region.

As previously explained, the image location information may facilitate the (direct) mapping between any location within the image and a geographic location. Thus, act 240 may comprise trivially mapping or calculating the location of the representation of each first candidate point to a corresponding geographic location.

As another example, e.g., where the image location information identifies the geographic location of only some of the elements represented in the image, an extrapolation technique may be employed to identify the geographic location of the representation of each first candidate point.

The method 200 also comprises an act 250 of deriving, using the processing system, the one or more access points using the one or more first candidate points.

In a simple example, act 250 comprises defining each first candidate point as one of the one or more access points.

In a more complex example, act 250 comprises merging or collating one or more sets of first candidate points (e.g., merge sets of first candidate points lying within a predetermined distance of one another) and defining the merged candidate point(s) as the one or more access points. The distance between two first candidate points can be trivially determined using the geographic location(s) of each first candidate point. In some examples, any candidate points that are not merged or collated are discarded.

In another example, act 250 comprises processing the geographic locations of first candidate points using a clustering algorithm (e.g., k-means, DBSCAN or the like) to produce one or more clusters of first candidate points. A centroid of each cluster may be identified as being an access point for the agricultural region.

Thus, act 250 may make use of the identified geographic location(s) identified in act 240 to derive the one or more access points.

Other example approaches for performing act 250 (e.g., making use of other candidate points) are provided later in this disclosure.

The method 200 also comprises an act 260 of outputting, from the processing system, the identified geographic location of each of the one or more access points. In particular, as the geographic location of each first candidate point is known (from act 240) then the geographic location of any subsequently derived access point (in act 250) can be trivially defined.

In performing act 260, the processing system may, for instance, output the identified geographic location(s) to a memory, a further processing system, a navigation system, a display system and/or any other suitable component or system for receiving and processing geographic location(s) of one or more access points.

In some examples, the method 200 further comprises labeling 270 each access point identified or derived in act 250, i.e., generating metadata for each access point.

By way of example only, if an access point is produced by merging more than a predetermined number of candidate points (e.g., 2 or more) then the access point may be labelled a wide access point (e.g., a gate).

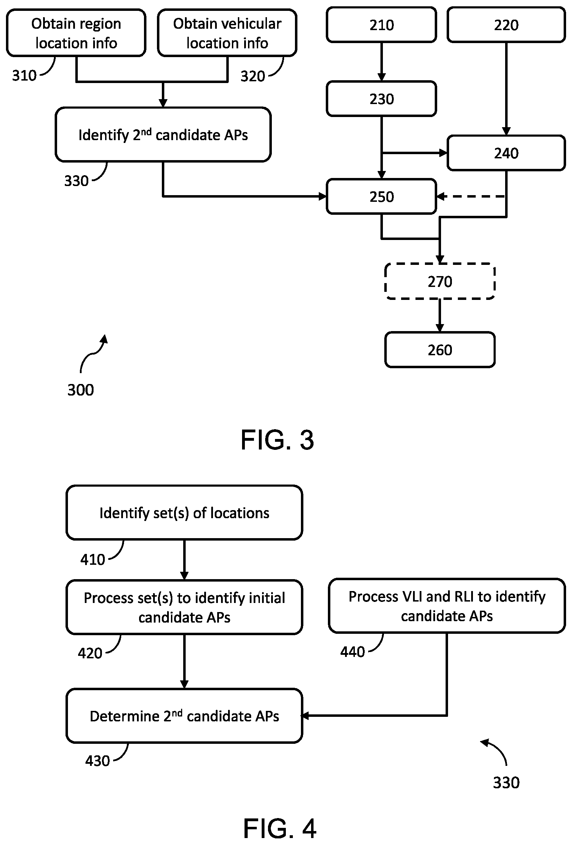

FIG. 3 illustrates a variant computer-implemented method 300 for determining the geographic location of one or more access points to an agricultural region.

The method 300 differs from the previously described method 200 (FIG. 2) by further comprising an approach for identifying the geographic location of one or more second candidate points. The first and second candidate points are then together processed to derive the one or more access points.

The method 300 is performed by the processing system 150 (FIG. 1). In particular, the method is performed by at least one processor 151 of the processing system 150 when executing instructions carried by one or more non-transitory storage media 152 of the processing system 150.

The method 300 comprises an act 310 of obtaining, at the processing system, region location information identifying the location of bounds of the agricultural region. More particularly, the region location information may identify the geographic location(s) of the bounds of the agricultural region.

Approaches for defining the location of bounds of a region or area are well known in the art, e.g., using co-ordinates to identify the location(s) of vertices of the region/area. In particular examples, the region location information is defined in a same co-ordinate system as that used to define the geographic location of one or more elements represented in the image of the agricultural region. This facilitates ease of processing later in the method.

The method 300 further comprises an act 320 of obtaining, at the processing system, vehicular location information identifying geographic locations of one or more agricultural vehicles.

The vehicular information may have been generated by one or more vehicle tracking systems, each configured to track or monitor the location of a respective agricultural vehicle. Suitable examples of vehicle tracking systems are well known in the art.

One common approach utilizes satellite navigation systems. The agricultural vehicle may be equipped with a GNSS (Global Navigation Satellite System) receiver that calculates its position by receiving and processing signals from multiple navigation satellites. This allows for precise positioning with accuracies potentially down to the centimeter level when using RTK (Real-Time Kinematic) corrections.

Another approach involves using terrestrial radio-based positioning systems. The agricultural vehicle may have an antenna or transponder that emits radio signals. These signals are then received by multiple fixed base stations at known locations. By measuring the time differences in signal arrival at the various stations, the vehicle's position can be triangulated or trilaterated. This approach can work well in areas with limited satellite visibility.

Some advanced tracking systems may combine multiple positioning technologies for improved accuracy and reliability. For example, an Inertial Navigation System (INS) using accelerometers and gyroscopes could be integrated with GNSS to provide continuous positioning even during brief satellite signal outages.

Cellular network-based positioning is another option, where the vehicle's location is estimated based on its connections to nearby cell towers. While generally less precise than satellite or dedicated radio systems, it can serve as a backup or complement to other methods.

Act 320 may comprise obtaining (i.e., receiving or retrieving) the vehicular location information directly from the vehicle tracking system(s) and/or a memory system that receives the vehicular location information from the vehicle tracking system(s). The position(s) of the agricultural vehicles are defined in the same co-ordinate space/system as the bounds of the agricultural region (in the region location information). This provides ease of processing later in the method.

In some examples, the vehicular location information comprises one or more time series, each time series comprising a sequence of locations of a respective agricultural vehicle at respective points in time.

The method also comprises an act 330 of processing, using the processing system, the region location information and the vehicular location information to identify the geographic location of one or more second candidate points. Example approaches for performing act 330 are later described.

Generally, the performance of act 330 recognizes that there is a relationship between the location of a vehicle and location of access points. For instance, the agricultural vehicle will only be able to cross the bounds of the agricultural region to enter/exit the region at an access point. Similarly, the agricultural vehicle may stop or pause at an access point, e.g., to perform loading/unloading of the agricultural vehicle. The recognition of this relationship thereby facilitates identification of possible candidate points.

In at least one example, act 330 comprises processing the region location information and the vehicular location information using a machine-learning method to identify the location of one or more access points. More particularly, the one or more machine-learning methods may comprise at least one neural network, which may be a recurrent neural network (RNN). A RNN is particularly suited to the processing and analysis of time series data, an example embodiment of the vehicular location information, making the identification of the location of one or more access points more reliable.

Some embodiments of act 230 therefore make use of one or more machine-learning algorithms for identifying an access point from vehicular location information and region location information.

Suitable examples of machine-learning algorithms have been previously described, which are trained from known input and output data. For the purposes of performing act 230, the known input data may comprise a plurality of input data records, each input data record comprising a different combination of vehicular location information and region location information. The corresponding known output data comprises, for each input data record, an identified location of one or more access points for the agricultural region represented in the region location information of the input data record. The output data may, for instance, be defined by a suitably trained operator or individual manually marking or annotating the location(s) of the access point(s) with respect to the location(s) defined in the region location information of the input data record. For improved robustness and reduced risk of overfitting, the input data preferably comprises a plurality of data records for a plurality of different agricultural regions.

The machine-learning algorithm used in act 230 may comprise one or more feature extraction algorithms to extract one or more features from the vehicular location information and region location information. The one or more features may then be processed by a machine-learning method to identify the access points. Thus, where relevant, in the preceding description of how to train a machine-learning algorithm, the term "vehicular location information and region location information" may be replaced by the term "one or more features extracted from the vehicular location information and region location information" where appropriate.

One example of a feature extraction algorithm that may be employed is a Fourier transform (e.g., an FFT) that produces frequency information of the vehicular location information. This approach is particularly useful where the vehicular location information comprises one or more time series, to facilitate to identify frequency information of each time frequency that may act as a feature.

A wide variety of other features that may be extracted from vehicular location information and/or region location information will be readily apparent to the skilled person. For instance, a number of feature extraction algorithms for use in process a time series (which may be included in some examples of vehicular location information) are provided by Barandas, Marília, et al. "TSFEL: Time series feature extraction library." SoftwareX 11 (2020): 100456 or Katircioglu-Öztürk, Deniz, et al. "A window-based time series feature extraction method." Computers in biology and medicine 89 (2017): 466-486 or Mörchen, Fabian. "Time series feature extraction for data mining using DWT and DFT." (2003): 1-31.

Other suitable approaches for feature extraction from the identified input data will be readily apparent to the appropriately skilled person.

Other example approaches for performing act 230 are provided later in this disclosure.

In method 300, the act 250 is modified to comprise deriving, using the processing system, the one or more access points from the one or more first candidate points and the one or more second candidate points. Thus, the first and second candidate points are processed to identify or derive the access points.

In a simple example, all of the first and second candidate points are defined as being access points.

In a more complex example, the second candidate points are used to verify the confidence or accuracy of the first candidate points or vice versa. For instance, act 250 may comprise identifying (as an access point) any first candidate point that is within a first predetermined distance of any second candidate point. Similarly, act 250 may comprise identifying any second candidate point that is within a second predetermined distance of any first candidate point.

The one or more access points identified in act 250 may, in this approach, comprise each identified first candidate point and/or each identified second candidate point. All other first and second candidate point(s) may be discarded.

In another approach, weights may be applied to each of first and second candidate points, e.g., based on their estimated reliability or accuracy. For example, image-derived (first) candidates may be given higher weight in areas with clear satellite imagery, while vehicle position derived (second) candidates may be weighted more heavily in areas with frequent vehicle traffic. The final access point locations could be determined by calculating the weighted average position of nearby candidates.

Another approach makes use of one or more clustering analysis techniques, in which a clustering algorithm (e.g., k-means, DBSCAN) is applied to the first and second candidate points to group said candidate points. The centroid of each resulting cluster (or a location on the bounds closest to the centroid of each resulting cluster) could be designated as an (identified) access point. This approach can help consolidate multiple nearby candidates into a single, representative access point.

FIG. 4 illustrates one approach for performing act 330 for producing the second candidate points, i.e., processing, using the processing system, the region location information and the vehicular information.

For the purposes of this approach, the vehicular location information comprises one or more time series, each time series comprising a sequence of locations of a respective agricultural vehicle at respective points in time. Thus, each time series represents how the location of an agricultural vehicle changes over time.

For the purposes of this approach, the vehicular location information comprises one or more time series, each time series comprising a sequence of locations of a respective agricultural vehicle at respective points in time. Thus, each time series represents how the location of an agricultural vehicle changes over time.

In the illustrated approach, act 330 comprises a sub-act 410 of identifying, in each time series of the vehicular information, one or more sets of one or more locations that meet one or more predetermined criteria.

By way of example, sub-act 410 may comprise identifying, in each time series of the vehicular information, one or more first sets of locations, each first set comprising two temporally consecutive locations that are either side of the bounds of the agricultural region. The location of the bounds of the agricultural region are defined in the region location information.

In the context of the present disclosure, locations in a time series are considered to be temporally consecutive when they occur in sequence without gaps.

It is trivial to identify whether or not a particular location is within an area defined by bounds using well-established mapping techniques. For instance, the determination of whether a location is inside or outside the agricultural region bounds may be performed using any known point-in-polygon algorithm such as the ray-casting algorithm or the winding number algorithm.

To identify each first set, the following process may be performed. For each time series in the vehicular location information: iterate through the sequence of locations in temporal order; for each pair of consecutive locations (L1, L2): determine whether L1 is inside or outside the agricultural region bounds; and determine whether L2 is inside or outside the agricultural region bounds. If L1 and L2 have different inside/outside statuses (i.e., one is inside and one is outside), mark this pair as a first set, otherwise do not mark this pair as a first set.

In some examples, act 410 comprises identifying, in each time series of the vehicular information, one or more second sets of two or more temporally consecutive locations that are spatially proximate to one another, and are spatially proximate to the location of the bounds of the agricultural region.

The determination of spatial proximity between two consecutive locations may be based on a predefined distance threshold. For example, two locations may be considered spatially proximate if they are within a certain number of meters from each other. This threshold may be adjustable based on factors such as the size of the agricultural region, the typical speed of agricultural vehicles, and/or the desired granularity of access point detection.

Similarly, the determination of spatial proximity to the bounds of the agricultural region may use another predefined distance threshold. By way of example, locations may be considered proximate to the bounds if they fall within a certain distance from the nearest point on the boundary. This approach allows for some flexibility in detecting access points, accounting for potential inaccuracies in GPS readings or slight variations in vehicle paths.

In some variants, each second set comprises two or more temporally consecutive locations that represent a time period of no less than 5 minutes, are spatially proximate to one another, and are spatially proximate to the location of the bounds of the agricultural vehicle. In other words, act 410 may also consider the duration for which a vehicle remains in a particular area near the bounds. For instance, if a vehicle's locations remain clustered in a small area near the boundary for more than a certain time period (e.g., no less than 5 minutes), this may be indicative of an access point where loading or unloading operations are taking place.

In some examples, act 410 comprises receiving vehicular action information that indicates, for each time series, any times at which the respective agricultural vehicle performed a loading or unloading procedure during the time period represented by the time series; and identifying, in each time series of the vehicular information, any third set of locations, wherein each third set of locations comprises temporally consecutive locations that are spatially proximate to the location of the bounds of the agricultural vehicle and for which the vehicular action information indicates that the respective agricultural vehicle was performing a loading or unloading procedure during a time period represented by the third set of locations.

This approach (for producing any third sets of locations) recognizes that access points are often locations where vehicles stop to load or unload materials (e.g., harvested crops, seeds, fertilizer). By correlating the vehicle's position data with known loading/unloading events, the method can more accurately pinpoint likely access points.

In some examples, sub-act 410 may apply additional filtering or validation acts to filter any sets identified using any one or more of the previously described techniques. Such filtering or validation acts may include defining a minimum distance threshold for each location in any set (i.e., only consider first sets where the distance between the two locations exceeds a certain threshold, to account for potential location inaccuracies) or defining a minimum angle of approach (e.g., by identifying the direction of movement between the two locations relative to the boundary - as access points are more likely where vehicles cross the boundary closer to the perpendicular).

The illustrated act 330 further comprises a sub-act 420 of processing each set of locations and the region location information to identify the location of one or more initial candidate points on the bounds of the agricultural region. The goal of sub-act 420 is to determine where the agricultural vehicle is likely to have crossed the boundary, which would indicate a potential access point.

A number of example sub-acts that may be performed to carry out sub-act 420, when the one or more sets of one or more locations comprises one or more first sets of locations, are hereafter described.

Sub-act 420 may, for instance, be performed by identifying the location, of the first set of locations, that is within the agricultural region; and identifying, as an initial candidate point, a first point on the bounds of the agricultural region that is most proximate to the identified location. This approach effectively projects one of the locations onto the nearest boundary segment.

As another example, sub-act 420 may be performed by identifying a hypothetical line that connects the locations in the first set of locations to one another; and identifying, as an initial candidate point, a point on the bounds of the agricultural region that intersects the identified hypothetical line. This approach effectively performs linear interpolation between the two locations in each set to estimate a crossing point on the boundary.

In a more complex example, for a first set of locations, the trajectory of the position of the agricultural vehicle represented in the corresponding time series could be tracked and used to extrapolate a location of intersection with the bounds of the region, which may represent an initial candidate point.

In some examples, sub-act 420 makes use of one or more filtering acts or procedures to filter the first set(s) of location before identifying any initial candidate point.

In some examples, sub-act 420 further comprises receiving vehicular indication information that indicates, for each first set of locations, whether or not at least one turn indicator of the respective agricultural vehicle was active during a time window during which the respective agricultural vehicle moved between the locations of the first set of locations; and filtering the first sets of locations to only include first sets of locations for which the at least one turn indicator of the respective agricultural vehicle was active during the time window during which the respective agricultural vehicle moved between the locations.

Vehicular indication information may, for instance, be generated by an onboard computer system of the agricultural vehicles, which typically monitors and records the status of various vehicle components and systems such as the turn indicator. In some implementations, a dedicated module may be connected to a CAN bus of the agricultural vehicle(s) to read and interpret signals related to turn indicator activation. As another example, dedicated sensors installed on the vehicle(s) may be used for monitoring turn indicator status, e.g., photoelectric sensors that detect the flashing of the turn indicator lights, or current sensors that detect the electrical current flow when the turn indicators are activated.

This approach improves the accuracy of access point detection by reducing false positives, as agricultural vehicles often travel along field boundaries without necessarily entering or exiting the field, they are more likely to activate turn indicators when actually using an access point. This technique may thereby help distinguish between actual access points and areas where vehicles merely pass close to the boundary (e.g., but inaccuracies in position data inaccurately indicate that they have crossed the boundary).

In some examples, sub-act 420 further comprises receiving vehicular speed information that indicates, for each time series, a speed of the respective agricultural vehicle during the time period represented by the time series; and filtering the first sets of locations to only include first sets of locations for which the vehicular speed information indicates a reduction in the speed of the respective agricultural vehicle immediately before and/or during a time period represented by the first set of locations.

Vehicular speed information provides additional context for identifying potential access points. More particularly, this approach recognizes that agricultural vehicles are more likely to slow down or reduce speed when approaching and/or passing through an access point. The speed reduction may be due to various factors such as navigating a potentially narrow entrance, avoiding obstacles, or preparing for a turn.

The vehicular speed information may be generated by the one or more onboard systems of the agricultural vehicle(s), such as the speedometer. The speed data may be recorded at regular intervals or for each location in the time series. In other words, each location in the times.

One approach to making use of the vehicular speed location is as follows: determine the average speed of the vehicle over a predetermined time window or distance before reaching each first set of location; compare this average speed to the speed at the time represented by the first set of locations; and determine if there is a significant reduction in speed, which may be defined as a speed decrease no less than a predetermined percentage decrease or an absolute speed difference. The threshold for what constitutes a significant speed reduction may be adjustable or definable based on factors such as the type of agricultural vehicle, the nature of the agricultural region (e.g., terrain, crop type), or the typical operating speeds for different agricultural operations.

In some variants, the system may also consider the duration of the speed reduction. For instance, a sustained period of lower speed may be more indicative of an access point than a brief deceleration.

In some implementations, the system may also consider the acceleration profile after the potential access point. A gradual increase in speed after crossing the boundary may further support the identification of an access point, as it may indicate the vehicle entering a new area where it can resume normal operating speed.

Example sub-acts for being performed where the one or more sets of locations comprises one or more second or third sets of locations are hereafter described.

In some examples, act 420 comprises, for each second/third set of locations, merging or collating locations in the set (e.g., merge locations) and identifying a nearest location on the bounds of the agricultural region to the merged location as an initial candidate point.

In another example, act 420 comprises, for each second/third set of locations, identifying a centroid of the set of locations. A closest location on the bounds of the agricultural region to the centroid may be identified as an initial candidate point on the bounds of the agricultural region.

The illustrated act 330 also comprises a sub-act 430 of determining the geographic location of the one or more second candidate points from the identified location of the one or more initial candidate points on the bounds of the agricultural region.

In a simple example, act 430 may simply comprise defining each initial candidate point as a second candidate point.

In a more complex example, act 430 comprises merging or collating one or more sets of initial candidate points (e.g., merge sets of initial candidate points lying within a predetermined distance of one another) and defining each merged candidate point as a second candidate point. The distance between two initial candidate points can be trivially determined using the geographic location(s) of each initial candidate point. In some approaches, any initial candidate point that is not merged may be discarded.

In another example, act 430 comprises processing the geographic locations of the initial candidate points using a clustering algorithm (e.g., k-means, DBSCAN or the like) to produce one or more clusters of initial candidate points. A centroid of each cluster, or a closest location on the bounds of the agricultural region to the centroid, may be identified as being a second candidate point.

In another example, where the initial candidate points are generated using two or more different techniques, then act 430 comprises processing the locations of initial candidate points to identify initial candidate points that lie within a predetermined distance (e.g., < 5m or < 2 m) of another initial candidate point produced using a different technique. A nearest location on the bounds of the agricultural region to the identified initial candidate point(s) (e.g., a nearest location on the bounds of the agricultural region to a midpoint on a hypothetical line connecting the identified initial candidate points) may then be defined as an access point. This provides a more robust mechanism for identifying access points, as the existence of an access point is indicated by two different mechanisms for defining the location of an initial candidate point.

In some examples, act 230 comprises an act 440 of processing the region location information and the vehicular location information using a machine-learning method to identify, as one or more initial candidate points, the location of one or more access points. Suitable approaches and examples of machine-learning algorithms for performing this task (the identification of the location of one or more access points) have been previously described and may be employed in this embodiment. The initial candidate point(s) produced by act 440 may be treated (i.e., in act 430) in an identical manner to any initial candidate point produced by act 420 (if performed).

In some embodiments, when act 440 is performed, then acts 410 and 420 may be omitted (as the initial candidate points may be generated an alternative way). However, in other examples, both acts 410 and 420 are performed together with 440 to increase the robustness of the method and likelihood of identifying one or more access points.

With reference to FIG. 2, it has previously been explained how the method 200 may further comprise an act 270 of labeling each access point identified or derived in act 250, i.e., generating metadata for each access point. This provides additional context and information about the identified access points, enhancing their usefulness for subsequent operations or analysis.

In some examples, the labeling process in act 270 defines one or more attributes or characteristics for each access point, e.g., based on the data used to identify it. For instance, access points may be categorized based on their likely purpose or usage patterns. Some access points may be labeled as primary entry/exit points, while others might be designated as secondary or emergency access points.

By way of example only, if an access point is produced by merging more than a predetermined number of candidate points (e.g., 2 or more) then the access point may be labelled a wide access point (e.g., a gate). Otherwise, the access point may be labelled as a narrow access point.

In some examples, the labeling process may take into account the frequency of use, e.g., as determined from the vehicular location information. Access points that are used more frequently may be labeled as "high-traffic" points, while those used less often might be labeled as "low-traffic" or "occasional use" points. Thus, act 270 may comprise processing the vehicular location information to identify a frequency of use for each access point, and labeling the access point(s) accordingly.

As another example, the labeling process may also consider the type of vehicles that typically use each access point. For example, the vehicular location information may be configured to indicate a type and/or size of vehicle, and if a larger vehicle, such as combine harvesters, frequently uses a particular access point, said access point may be labeled as a "wide access point" or "heavy machinery access point".

As another example, the labeling process may incorporate information about the surrounding terrain or infrastructure. Access points near storage facilities might be labeled as "loading/unloading points," while those adjacent to roads could be labeled as "road access points". The information about the surrounding terrain or infrastructure may be produced by processing the image of the agricultural region (e.g., using object detection algorithms or the like, examples of which have been previously described) and/or consulting predefined topographical data of the area surrounding the agricultural region.

Act 270 may comprise storing the label(s) as metadata associated with each access point's geographic location. This metadata can be used in subsequent processing acts or by other systems, such as navigation systems, to improve route planning, resource allocation, or other agricultural operations.

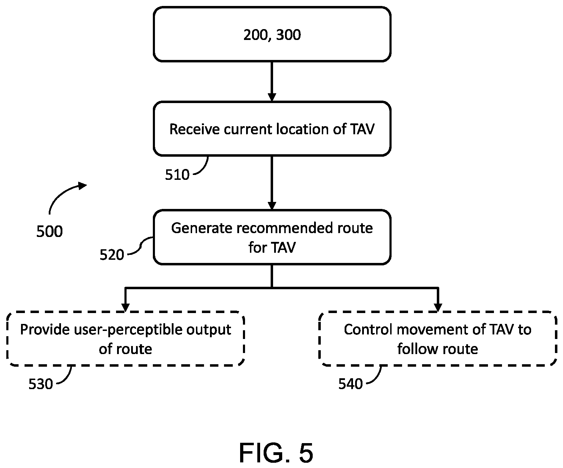

FIG. 5 illustrates a computer-implemented method 500 that includes one or more further optional acts that are performed by a navigation system.

In particular, the method 500 includes performing the method 200, 300 previously disclosed. Method 200, 300 is performed by the processing system. More particularly, method 200, 300 is performed by at least one processor of the processing system when executing instructions carried by at least one memory of the processing system.

In this embodiment, when performing method 200, 300, the act 260 (FIG. 2 and FIG. 3) of outputting, from the processing system, the identified location of the one or more access points comprises passing the identified location of the one or more access points from the processing system to the navigation system.

The navigation system is configured to perform at least acts 510 and 520. More particularly, acts 510 and 520 may be performed by at least one processor of the navigation system when executing instructions carried by at least one memory of the processing system.

Act 510 comprises receiving, at the navigation system, a current location of a target agricultural vehicle (TAV). The current location may have been generated by a target vehicle tracking systems configured to track or monitor the location of the target agricultural vehicle. Suitable examples of vehicle tracking systems are well known in the art, some of which have been previously disclosed.

Act 520 comprises generating, using the navigation system, a recommended route for the target agricultural vehicle responsive to a current location of the target agricultural vehicle and the identified location of the one or more access points. Thus, act 520 comprises using a route planning capability of the navigation system to create a recommended path for the agricultural vehicle to follow.

In addition to the current location and the identified location of the one or more access points, the navigation system may also take a number of other variables into account when generating the recommended rout, such as the layout of the agricultural region (e.g., defined by the route location information - which may also be provided to the navigation system), any known obstacles or terrain features, and potentially the specific agricultural task to be performed. Yet other variables that may be taken into account by the navigation system fuel efficiency/usage, soil compaction, and/or optimizing/improving coverage of the field.

The navigation system may also take into account real-time factors such as the current status of the agricultural region (e.g., wet areas to avoid), the presence of other vehicles, or time-sensitive operations. This increases a likelihood that the recommended route is not only efficient but also practical and safe for the specific conditions at the time of route generation.

In some simple examples, the recommended route generated in act 520 may be a simple point-to-point path from a current location to the nearest access point.

In a more complex example, the recommended route generated in act 520 may be a more complex route that incorporates multiple waypoints within the agricultural region. For instance, if the target agricultural vehicle wishes or desires to perform a specific agricultural task across the field (e.g., spraying, ploughing, planting, harvesting etc.), the recommended route may guide the agricultural vehicle through an identified access point and then along an efficient path to cover the required area whilst ending at an identified access point.

Other suitable examples of route planning techniques using the location(s) of access points for the agricultural region will be readily apparent to the skilled person.

Once generated, this recommended route can be communicated to the vehicle operator through various means, such as a visual display on an in-cab screen and/or audio instructions.

Thus, in some examples, the method 500 further comprises an act 530 of providing a user-perceptible output of the recommended route. The user-perceptible output may be a visual representation/display (e.g., on a display screen such as an in-cab screen) and/or an audio representation (e.g., an audio output provided via a speaker or the like).

In some examples, the recommended route may be used to automatically control 540 a movement of the agricultural vehicle, e.g., may be directly input into an automated guidance system of the agricultural vehicle, so as to follow the recommended route.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

It will be understood that disclosed methods are preferably computer-implemented methods. As such, there is also proposed the concept of a computer program comprising code means for implementing any described method when said program is run on one or more processors of a processing system, such as a computer. Thus, different portions, lines or blocks of code of a computer program according to an embodiment may be executed by at least one processor of the processing system to perform any herein described method.

A computer program may be stored on a non-transitory computer-readable medium, itself an embodiment of the disclosure. A "computer-readable medium" is any suitable mechanism or format that can store a program for later processing by at least one processor of a processing system. The computer readable medium can be, for example but not limited to, an electronic, magnetic, optical, electromagnetic, infrared, or semiconductor system, apparatus or device.

Thus, there is provided a non-transitory computer program product comprising instructions which, when the instructions are executed by at least one processor, cause the at least one processor to carry out any herein proposed computer-implemented method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for determining the geographic location of one or more access points to an agricultural region, the computer-implemented method comprising:
obtaining, at a processing system, an image of the agricultural region;
obtaining, at the processing system, image location information that defines the geographic location of one or more elements represented in the image of the agricultural region;
processing, using the processing system, the image of the agricultural region to identify the representation of one or more first candidate points in the image of the agricultural region;
processing, using the processing system, the image location information to identify the geographic location of the one or more first candidate points having an identified representation in the agricultural region;
deriving, using the processing system, the one or more access points using the one or more first candidate points; and
outputting, from the processing system, the identified geographic location of each of the one or more access points.

2. The computer-implemented method of claim 1, wherein the act of processing, using the processing system, the image of the agricultural region comprises processing, using the processing system, the image of the agricultural region using one or more machine-learning methods to identify the representation of the one or more candidate points; optionally wherein the one or more machine-learning methods comprise at least one convolutional neural network.

3. The computer-implemented method of any one of claims 1 to 2, wherein the image of the agricultural region is captured using a satellite imaging technique or an aerial photography technique; optionally wherein the image location information identifies the geographic location of all elements represented in the image of the agricultural region.

4. The computer-implemented method of any one of claims 1 to 3, further comprising:
obtaining, at the processing system, region location information identifying the location of bounds of the agricultural region;
obtaining, at the processing system, vehicular location information identifying geographic locations of one or more agricultural vehicles;
processing, using the processing system, the region location information and the vehicular location information to identify the geographic location of one or more second candidate points,
wherein deriving, using the processing system, the one or more access points comprises deriving, using the processing system, the one or more access points from the one or more first candidate points and the one or more second candidate points.

5. The computer-implemented method of claim 4, wherein deriving, using the processing system, the one or more access points comprises:
identifying any first candidate point that is within a first predetermined distance of any second candidate point;
identifying any second candidate point that is within a second predetermined distance of any first candidate point; and
deriving, using the processing system, the one or more access points from any identified first candidate point and any identified second candidate point.

6. The computer-implemented method of claim 4 or 5, wherein the vehicular location information comprises one or more time series, each time series comprising a sequence of locations of a respective agricultural vehicle at respective points in time.

7. The computer-implemented method of claim 6, wherein the act of processing, using the processing system, the region location information and the vehicular information comprises:
identifying, in each time series of the vehicular information, one or more sets of locations that meet one or more predetermined criteria;
processing each set of locations and the region location information to identify the location of one or more initial candidate points on the bounds of the agricultural region; and
determining the geographic location of the one or more second candidate points from the identified location of the one or more initial candidate points on the bounds of the agricultural region.

8. The computer-implemented method of claim 7, wherein the act of identifying, in each time series of the vehicular information, one or more sets of locations comprises identifying, in each time series of the vehicular information, one or more first sets of two temporally consecutive locations that are either side of the bounds of the agricultural region.

9. The computer-implemented method of claim 8, wherein processing each set of locations comprises, for each identified first set of locations:
identifying the location, of the first set of locations, that is within the agricultural region; and identifying, as an initial candidate point, a first point on the bounds of the agricultural region that is most proximate to the identified location; or
identifying a hypothetical line that connects the locations in the first set of locations to one another; and identifying, as an initial candidate point, a point on the bounds of the agricultural region that intersects the identified hypothetical line.

10. The computer-implemented method of any one of claims 7 to 9, wherein processing each set of locations comprises:
receiving vehicular indication information that indicates, for each first set of locations, whether or not at least one turn indicator of the respective agricultural vehicle was active during a time window during which the respective agricultural vehicle moved between the locations of the first set of locations; and
filtering the first sets of locations to only include first sets of locations for which the at least one turn indicator of the respective agricultural vehicle was active during the time window during which the respective agricultural vehicle moved between the locations.

11. The computer-implemented method of any one of claims 7 to 10, wherein processing each set of locations comprises:
receiving vehicular speed information that indicates, for each time series, a speed of the respective agricultural vehicle during the time period represented by the time series; and
filtering the first sets of locations to only include first sets of locations for which the vehicular speed information indicates a reduction in the speed of the respective agricultural vehicle immediately before and/or during a time period represented by the first set of locations.

12. The computer-implemented method of any one of claims 7 to 11, wherein the act of identifying, in each time series of the vehicular information, one or more sets of locations comprises identifying, in each time series of the vehicular information, one or more second sets of two or more temporally consecutive locations that are spatially proximate to one another, and are spatially proximate to the location of the bounds of the agricultural region; optionally wherein each second set comprises two or more temporally consecutive locations that represent a time period of no less than 5 minutes, are spatially proximate to one another, and are spatially proximate to the location of the bounds of the agricultural vehicle.

13. The computer-implemented method of any one of claims 7 to 12, wherein the act of identifying, in each time series of the vehicular information, one or more sets of locations comprises:
receiving vehicular action information that indicates, for each time series, any times at which the respective agricultural vehicle performed a loading or unloading procedure during the time period represented by the time series; and
identifying, in each time series of the vehicular information, any third set of locations, wherein each third set of locations comprises temporally consecutive locations that are spatially proximate to the location of the bounds of the agricultural vehicle and for which the vehicular action information indicates that the respective agricultural vehicle was performing a loading or unloading procedure during a time period represented by the third set of locations.

14. The computer-implemented method of any one of claims 1 to 13, wherein:
outputting, from the processing system, the identified location of the one or more access points comprises passing the identified location of the one or more access points from the processing system to a navigation system; and
the computer-implemented method further comprises:
receiving, at the navigation system, a current location of a target agricultural vehicle; and
generating, using the navigation system, a recommended route for the target agricultural vehicle responsive to a current location of the target agricultural vehicle and the identified location of the one or more access points.

15. A processing system comprising:
at least one processor; and
at least one memory carrying instructions that, when executed by the at least one processor, cause the at least one processor to:
obtain an image of the agricultural region;
obtain image location information that defines the geographic location of one or more elements represented in the image of the agricultural region;
process the image of the agricultural region to identify the representation of one or more candidate points in the image of the agricultural region;
process the image location information to identify the geographic location of the one or more first candidate points having an identified representation in the agricultural region;
derive the one or more access points using the one or more first candidate points; and
output the identified geographic location of each of the one or more access points.
